# EUROPEAN PATENT APPLICATION

(11) **EP 1 803 631 A1**
(43) Date of publication of application: **04.07.2007**
(21) Application number: 06126498.2
(22) Date of filing: 19.12.2006
(51) Int. Cl.: B62D 15/02, B60W 40/00, B60W 10/20

(54) **Parking assistance system**

(30) Priority: 27.12.2005 JP 2005374949
(71) Applicant: AISIN SEIKI KABUSHIKI KAISHA, Kariya-shi, Aichi-ken 448-8650 (JP)
(72) Inventor: Tanaka, Yu, Kariya-shi Aichi 448-8650 (JP)
(74) Representative: TBK-Patent

(57) **Abstract**

A parking assistance system includes an imaging means (6a) for obtaining image information of surroundings of a vehicle, a displaying means (5a) for displaying the image information, a vehicle position calculating means (24) for calculating a vehicle position from the image information, a parking reference detecting means (21) for detecting a parking reference from the image information, a target position setting means (22) for setting a parking target position on the basis of the parking reference, a guiding means (23) for guiding the vehicle to the parking target position and a target position renewing means (25) for renewing the parking target position during the guiding. The parking reference detecting means detects the parking reference every time the vehicle moves under a predetermined condition during the guiding. The target position renewing means renews the parking target position on the basis of a position of the parking reference relative to the vehicle.

## Description

### FIELD OF THE INVENTION

This invention generally relates to a parking assistance system.

### BACKGROUND

Recently, driving assistance, in other words, electronic control of a part of driving operations, which have been performed depending on driving technique of an occupant, is gradually growing popular along with advancing electronic, control technology. For example, a parking assistance for assisting driving operations at the time of parking a vehicle is gaining popularity.

Such a parking assistance system is, for example, described in JP2000-79860A. In the parking assistance system, a camera provided at a vehicle is utilized to take an image of surroundings of the vehicle including a parking reference, which is utilized as a reference for determining a parking target position. The taken image is analyzed to detect a parking stall and to set the parking target position on the basis of the detected parking stall. Then, the vehicle is guided toward the set parking target position.

In the parking assistance system described above, the parking target position is set before parking is started. Then, the vehicle is guided to the parking target position. Therefore, in a situation where the parking target position is set in a state where the vehicle is distant from the parking stall, there can be a situation where the parking target position is set on the basis of a small image of the parking reference. Accordingly, there can be a situation where the parking target position is not necessarily set at a preferable position in relation to the parking reference and the vehicle is not guided to a preferable parking target position.

A need thus exists for a parking assistance system, which can guide a vehicle to a preferable parking target position. The present invention has been made in view of the above circumstances and provides such a parking assistance system.

### SUMMARY OF THE INVENTION

1. According to a first aspect of the present invention, a parking assistance system includes an imaging means for obtaining image information by taking an image of scenery of surroundings of a vehicle, a vehicle position calculating means for calculating a position of the vehicle on the basis of the image information obtained by imaging means, a parking reference detecting means for detecting a parking reference utilized as a reference for parking from the image information and a target position setting means for setting a parking target position on the basis of the parking reference. The parking assistance system further includes a parking reference renewing means for renewing the parking reference every time the vehicle moves under a predetermined condition; and a target position renewing means for renewing the parking target position based on the parking reference renewed by the parking reference renewing means every time the vehicle moves under a predetermined condition.

### BRIEF DESCRIPTION OF THE DRAWINGS

The foregoing and additional features and characteristics of the present invention will become more apparent from the following detailed description considered with reference to the accompanying drawings, wherein:
Fig. 1 represents a block diagram illustrating a parking assistance system according to an embodiment of the present invention;
Fig. 2 represents a diagram illustrating a vehicle at which the parking assistance system is provided;
Fig. 3 represents a diagram illustrating a parking operation of the vehicle to a parking area;
Fig. 4 represents a diagram illustrating a screen of a monitor apparatus before transition to a target position setting mode;
Fig. 5 represents a diagram illustrating the screen of the monitor apparatus after the transition to the target position setting mode;
Fig. 6 represents a diagram illustrating the screen of the monitor apparatus during a parking target position set;
Fig. 7 represents a diagram illustrating the screen of the monitor apparatus after the parking target position set;
Fig. 8 represents a diagram illustrating the screen of the monitor apparatus after an occupant changes the parking target position;
Fig. 9 represents a diagram illustrating the screen of the monitor apparatus after the parking target position is determined;
Fig. 10 represents a diagram illustrating the screen of the monitor apparatus during a parking assistance;
Fig. 11 represents a diagram illustrating the screen of the monitor apparatus during the parking assistance;
Fig. 12 represents a diagram illustrating the screen of the monitor apparatus after the parking assistance is ended;
Fig. 13 represents a flow chart illustrating an operation of the parking assistance system;
Fig. 14 represents a flow chart illustrating a parking stall line-detecting process in Figs. 13 and 15;
Fig. 15 represents a flow chart illustrating a parking target position renewing process in Fig. 13; and
Fig. 16 represents a block diagram illustrating a parking assistance system according to another embodiment. '

### DETAILED DESCRIPTION

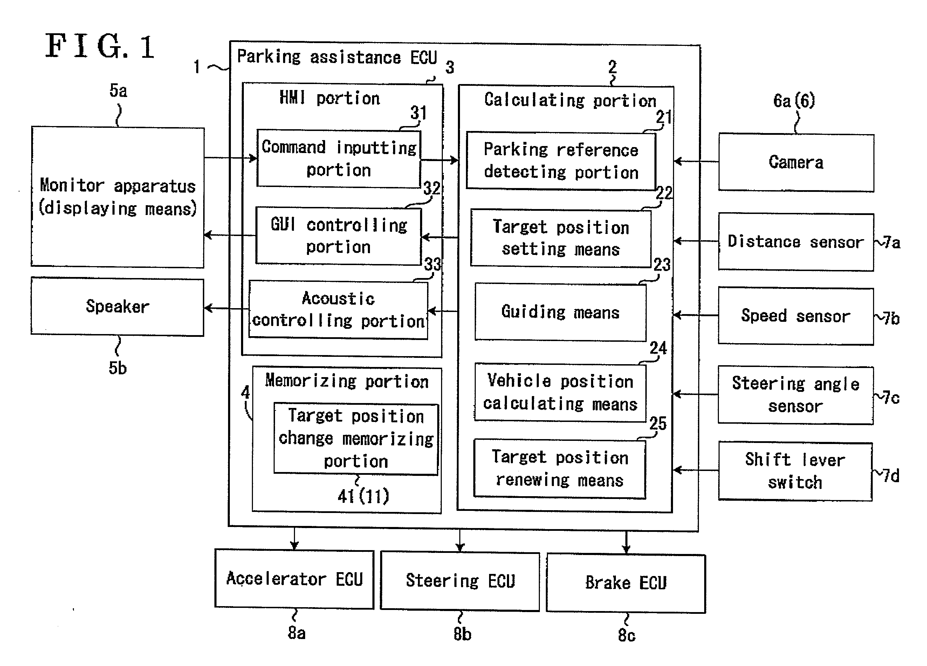

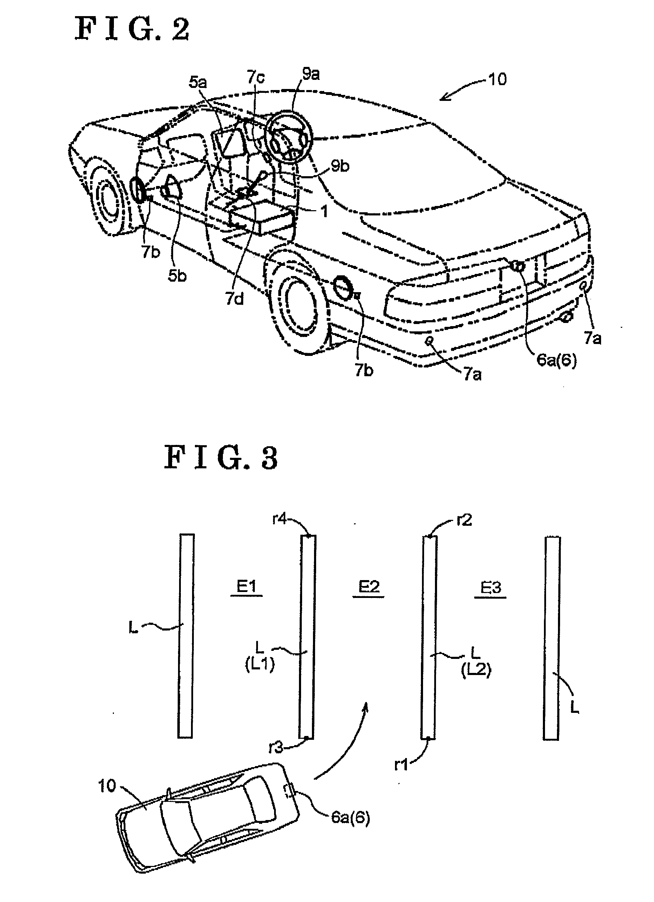

[Basic configuration] An embodiment of the present invention will be explained with reference to drawing figures. Fig. 1 represents a block diagram typically illustrating a configuration of a parking assistance system according to an embodiment of the present invention. Fig. 2 represents a perspective view illustrating an example of a vehicle 10 at which the parking assistance system according to the embodiment of the present invention is provided. A parking assistance electronic control unit (ECU) 1 illustrated in Figs. 1 and 2 is configured from a microcomputer and a digital signal processor (DSP), or the like. The parking assistance ECU 1 obtains various kinds of information of the vehicle 10 and of surroundings of the vehicle 10 from a camera 6a (example of an imaging means 6), a distance sensor 7a, a speed sensor 7b, a shift lever switch 7d, a steering angle sensor 7c, or the like, to assist an occupant in a parking operation of the vehicle 10. A monitor apparatus 5a (displaying means), a speaker 5b, or the like, is an informing apparatus for providing assistance information from the parking assistance ECU 1 to the occupant. Furthermore, a monitor apparatus 5a (displaying means, guiding means) guides the vehicle to the parking target position by displaying assistance information (for example, a guiding path) for a driver who drives the vehicle. On the other hand, a speaker 5b (guiding means) also can guide the vehicle to the parking target position by providing assistance information to the occupant. A button is provided at the monitor apparatus 5a. Or, a screen V of the monitor apparatus 5a is a touch panel. In other words, the monitor apparatus 5a serves as the displaying means. At the same time, the monitor apparatus 5a serves as an inputting means for receiving an input of a command from the occupant. Further, the parking assistance ECU 1 provides assistance information to other control apparatuses of the vehicle 10, for example, an accelerator ECU 8a, a steering ECU 8b and a brake ECU 8c also. Then, the accelerator ECU 8a, the steering ECU 8b and the brake ECU 8c control an accelerator (accelerator means), a steering wheel 9a (steering means) and a brake apparatus (brake means) of the vehicle 10 on the basis of the assistance information to control the vehicle 10 and to guide the vehicle 10 to a parking target position.

As illustrated in Fig. 1, the parking assistance ECU 1 includes a human-machine interface (HMI) portion 3, a calculating portion 2, and a memorizing portion 4 for memorizing various information. The HMI portion 3 includes a command inputting portion 31, a graphic user interface (GUI) controlling portion 32 and an acoustic controlling portion 33. The command inputting portion 31 receives a command to change a set parking target position, or the like, on an image displayed on the monitor apparatus 5a through the GUI controlling portion 32. The GUI controlling portion 32 receives a calculation result of the calculating portion 2 and performs a control of displaying an image of scenery of surroundings of the vehicle 10 and an image of parking assistance information, which overlaps with the image of scenery, on the monitor apparatus 5. Further, the GUI controlling portion 32 performs a control for displaying a content of the touch panel on the screen V of the monitor apparatus 5a.

The calculating portion 2 includes a parking reference detecting means 21 (target position renewing means), a target position setting means 22, a guiding means 23, a vehicle position calculating means 24 and a target position renewing means 25. The parking reference detecting means 21 analyzes the image (image information) inputted from the camera 6a to detect the parking reference, which is utilized as a reference for setting the parking target position. The target position setting means 22 sets the parking target position on the basis of the detected parking reference. The vehicle position calculating means 24 detects a position of the vehicle 10 on the basis of the image inputted from the camera 6a and detection results of the distance sensor 7a, the speed sensor 7b, the steering angle sensor 7c, or the like. The guiding means 23 calculates a path (guiding path) to the parking target position on the basis of the parking target position and a position of the vehicle 10. The guiding means 23 guides the vehicle 10 to the parking target position. The guiding means controls the accelerator ECU 8a (accelerator means), the steering ECU 8b (steering means) and the brake ECU 8c (brake means). Further, the guiding means 23 operates the monitor apparatus 5a so as to display assistance information. The assistance information includes the guiding path, relationship between the current vehicle position and the parking target position and indication for the driver. Furthermore, the guiding means 23 operates the speaker 5b so as to provide assistance information to the driver. The parking reference detecting means 21 (parking reference renewing means) renewing the parking reference every time the vehicle moves under a predetermined condition. The target position renewing means 25 renews the parking target position on the basis of a position of the parking reference, which is renewed by the parking reference detecting means 21, relative to the vehicle 10 every time the vehicle 10 moves under a predetermined condition.

In the meantime, each portion and means of the parking assistance ECU 1 indicates distinction of functions. Accordingly, it is not necessary that each portion and means are provided independently. For example, it is also possible that each function is accomplished by a software program performed by the parking assistance ECU 1.

As illustrated in Fig. 2, the camera 6a is provided at a rear of the vehicle 10. However, a position of the camera 6a is not limited to this. It is possible that cameras 6a are provided at a front and a rear of the vehicle 10. Any configuration can be employed if at least one camera 6a is provided at a rear of the vehicle 10. An image taken by the camera 6a is displayed on the monitor apparatus 5a as scenery of surroundings of the vehicle 10. The speed sensor 7b is, for example, a rotational sensor provided at each wheel. A speed of the vehicle 10 is measured by detecting a rotational frequency of each wheel. Or, it is possible that the speed sensor 7b (rotational sensor) detects only the rotational frequency and the parking assistance ECU 1 calculates a moving speed of the vehicle 10 on the basis of the rotational frequency. The steering sensor 7c is provided near the steering wheel 9a. The parking assistance ECU 1 computes a state of steering of the vehicle 10 from a detection result of the steering angle sensor 7c. Further, the parking assistance ECU 1 computes whether the vehicle 10 is in a state of moving forward or in a state of moving backward from the shift lever switch 7d. In the meantime, in a situation where the speed sensor 7b is configured from a rotational sensor, a state of moving forward or a state of moving backward can be detected on the basis of a rotational direction of the rotational sensor. Further, if a rotational sensor is provided at each of four wheels, it is possible that the parking assistance ECU I calculates the steering angle on the basis of difference of rotational frequency of each wheel. Then, the vehicle position calculating means 24 of the calculating portion 2 calculates a position of the vehicle 10 relative to a target to be reached and a position of the parking reference relative to the vehicle 10 on the basis of these items of information.

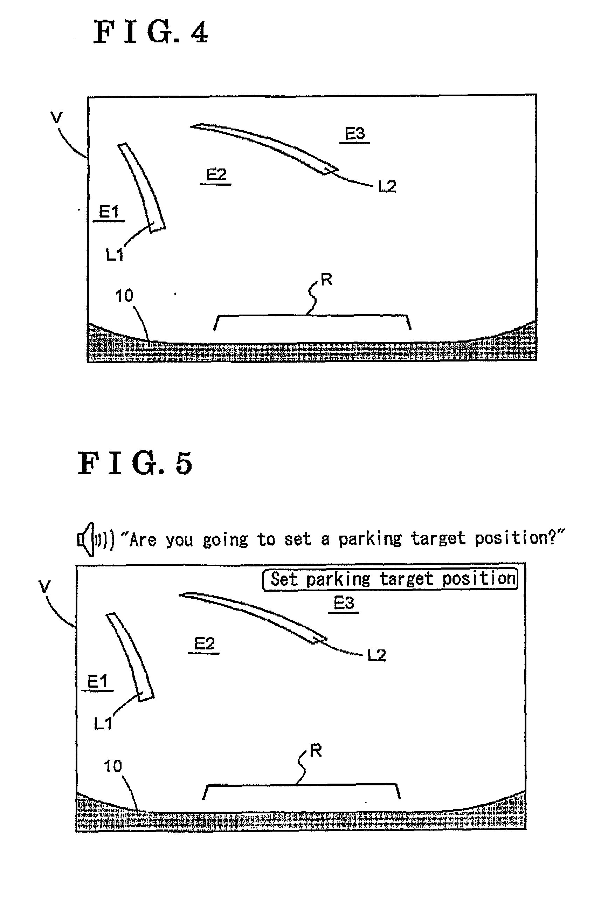

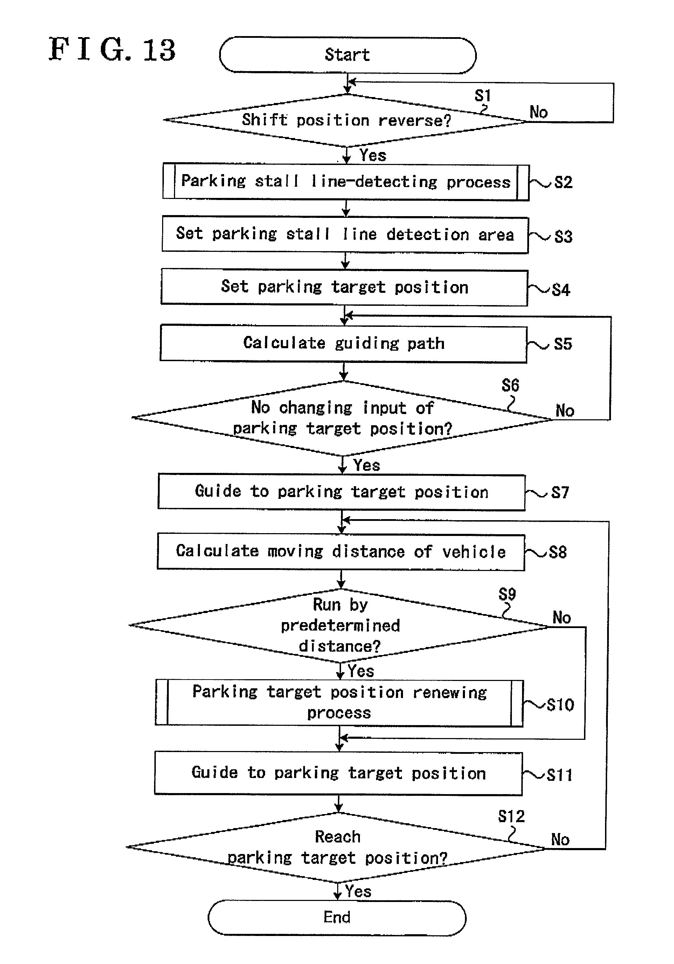

[Operation of the parking assistance system] Fig. 3 represents an explanatory view of the vehicle 10 seen from above. Figs. 4 to 12 represent diagrams illustrating changes of the screen V of the monitor apparatus 5a during a parking assistance operation of the parking assistance system according to the embodiment of the present invention. Fig. 13 represents a flow chart illustrating operations of the parking assistance system. The operations of the parking assistance system will be explained with reference to these figures.

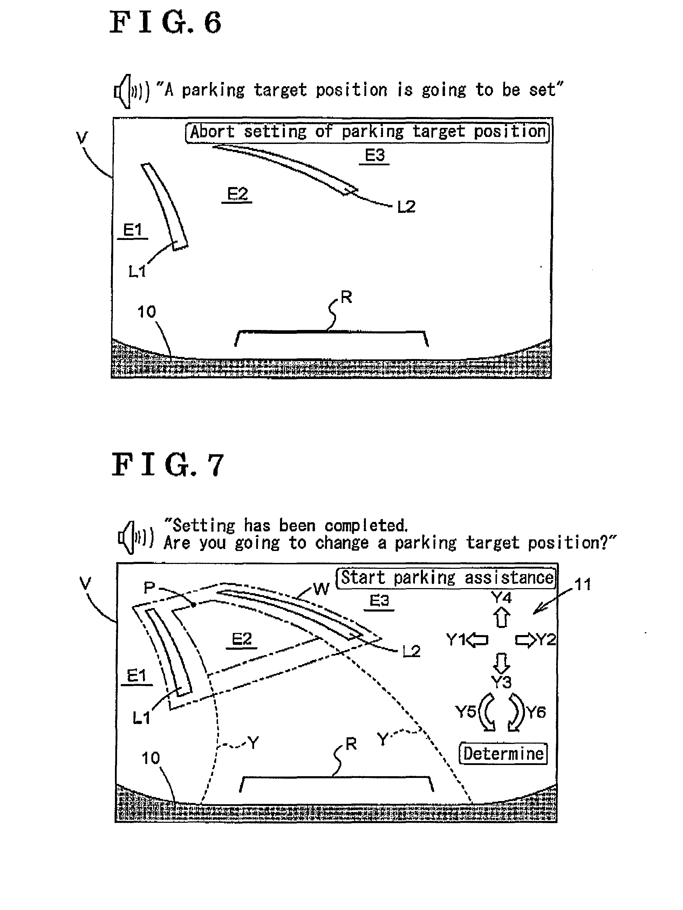

A symbol L in Fig. 3 indicates a parking stall line (example of a parking reference) drawn on a parking area (parking space) for dividing into parking stalls E1, E2 and E3. Fig. 4 represents an explanatory diagram illustrating the screen V displayed on the monitor apparatus 5a provided in a vehicle compartment in a situation where the vehicle 10 is present at a position illustrated in Fig. 3. Full view of the parking stall E2 divided by a parking stall line L1 and a parking stall line L2 is displayed on an upper left of the screen V. A part of a rear bumper portion of the vehicle 10 is displayed on a lower portion of the screen V. Further, R in Fig. 4 indicates a caution line, which indicates, for example, rearward from a most rear portion of the vehicle 10 by thirty centimeters. In a situation where a driver once stops the vehicle 10 in this state, intending to park the vehicle 10 in the parking stall E2, the speed sensor 7b detects that the vehicle 10 stops and transmits the detection result to the calculating portion 2 of the parking assistance system. Further, in a situation where the driver sets a shift lever 9b to reverse, the shift lever switch 7d detects that the shift lever 9b is set to reverse and transmits the detection result to the calculating portion 2. In a situation where two detection results described above are transmitted to the calculating portion 2, the parking assistance ECU 1 transfers to a target position setting mode (Yes branch of #1). In a situation where the parking assistance ECU 1 transfers to the target position setting mode, as illustrated in Fig. 5, a message "Set parking target position" is displayed on the screen V of the monitor apparatus 5a and an acoustic message "Are you going to set a parking target position?" is emitted from the speaker 5b. In a situation where an occupant touches the message "Set parking target position" displayed on the monitor, as illustrated in Fig. 6, an acoustic message "A parking target position is going to be set" is emitted from the speaker 5b, and a setting of the parking target position is started. In a situation where the parking assistance is started, a message "Abort setting of parking target position" is displayed on the screen V of the monitor 5a. In other words, the message indicates that the parking target position is currently being set, and in a situation where the occupant wants to abort the parking assistance, the occupant can stop the setting by touching the screen where the message is displayed.

In the parking target position setting mode, at first, a parking stall line-detecting process for detecting the parking stall line L, which becomes a reference for setting the parking target position, is performed (#2). In the parking stall line-detecting process, the parking reference detecting means 21 processes the image taken by the camera 6a to detect the parking stall line L. In the meantime, details of the parking stall line-detecting process will be described later. In a situation where the parking stall line-detecting process is ended, a parking stall line detection area W, in which the parking stall line-detecting process is performed at the time of a parking target position renewing process described later, is set on the basis of information on the parking stall line L, for example, information on distances between both ends r1 and r2 and between both ends r3 and r4 of the parking stall lines L1 and L2, information on a distance between the parking stall lines L1 and L2, or the like (#3). Further, the target position setting means 22 sets the parking target position on the basis of the obtained information of the parking stall line L (#4). The parking target position is set on the basis of the information on the parking stall line L, for example, the information on the distances between the both ends r1 and r2 and between the both ends r3 and r4 of the parking stall lines L1 and L2, the information on the distance between the parking stall lines L1 and L2, or the like, so that the vehicle 10 can be parked at a center of the parking stall. In the meantime, a setting of the parking target position is not limited to the example described above. Another method can be employed. For example, it is possible to detect one parking stall line L and to set a parking target position at a position distant from the parking stall line L by a predetermined distance.

In a situation where the parking target position is set, the guiding means 23 calculates a guiding path for parking on the basis of the information on a current position of the vehicle 10 calculated by the vehicle position calculating means 24 and the information on the parking target position (#5). In a situation where the setting of the parking target position and the calculation of the guiding path are completed, as illustrated in Fig. 7, an acoustic message "Setting has been completed. Are you going to change a parking target position?" is emitted from the speaker 5b. Then, indications of the parking target position and the guiding path to the parking target position are displayed on the screen V of the monitor apparatus 5a. Y in Fig. 7 indicates the indication of the guiding path. P in Fig. 7 indicates a most rear portion at the time when the vehicle 10 reaches the parking target position. An area surrounded by a dashed line indicates an area, in which the vehicle 10, which has reached the parking target position, is parked. Further, arrows Y1, Y2, Y3, Y4, Y5 and Y6 for changing the parking target position and a message "Determine parking target position" are displayed.

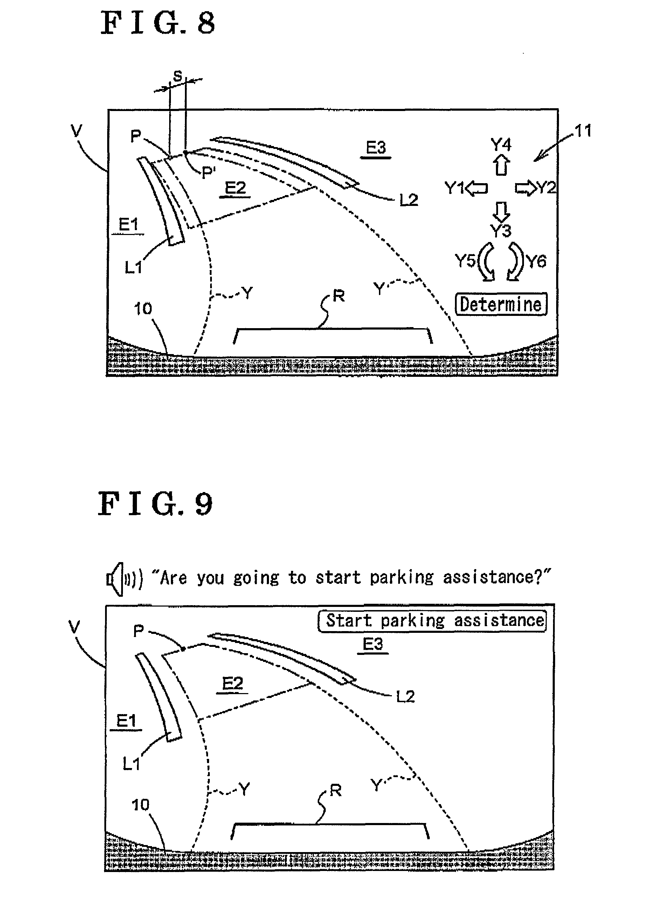

In a situation where change of the parking target position, which is set initially, is not necessary, and in a situation where the occupant touches the message "Determine parking target position", the parking target position is determined (Yes branch of #6). On the other hand, in a situation where the occupant wants to change the set parking target position, the occupant can change the parking target position by touching arrows Y1, Y2, Y3, Y4, Y5 and Y6, which are displayed on the screen V of the monitor apparatus 5a, selecting one arrow for directing a position to which the occupants wants to change the parking target position. For example, as illustrated in Fig. 8, in a situation where the occupant wants to move the parking target position rightward on the screen V, the occupant can change the parking target position by touching the arrow Y2. P in Fig. 8 indicates the parking target position before the change and P' indicates a parking target position after the change. In a situation where the parking target position is changed, the guiding path is calculated again and displayed on the monitor by the guiding means 23 (No branch of #6). In a situation where the occupant wants to change the parking target position again, the occupant can change the parking target position by touching a corresponding arrow. After that, in a situation where the occupant touches the message "Determine parking target position", the parking target position is determined (Yes branch of #6). Further, a difference S between the parking target position set by the target position setting means 22 and the parking target position changed by the operation of the arrows Y1, Y2, Y3, Y4, Y5 and Y6 by the occupant is memorized by a target position change memorizing portion 41 of the memorizing portion 4 on the basis of, for example, a relative position with the parking reference in a vehicle width direction. Here, the arrows Y1, Y2, Y3, Y4, Y5 and Y6 and the target position change memorizing means serve as a target position changing means 11.

In a situation where the parking target position is determined, as illustrated in Fig. 9, an acoustic message "Are you going to start parking assistance?" is emitted from the speaker 5b. Further, a message "Start parking assistance" is displayed on the screen V of the monitor apparatus 5a. In a situation where the occupant touches the message "Start parking assistance", the parking assistance system transfers to a parking assistance mode.

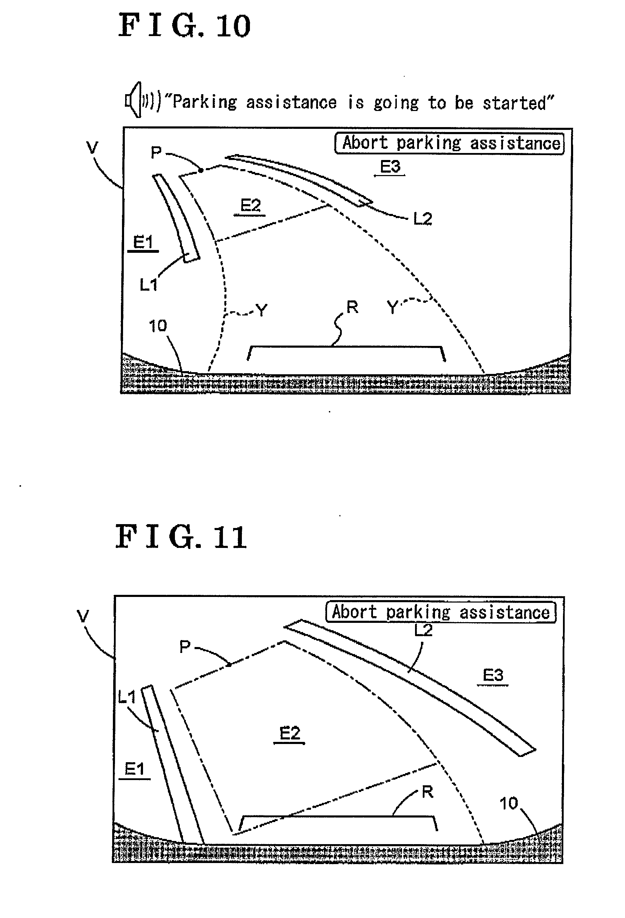

In a situation where the parking assistance system transfers to the parking assistance mode, as illustrated in Fig. 10, an acoustic message "Parking assistance is going to be started" is emitted from the speaker 5b. Further, a message "Abort parking assistance" appears on the screen V of the monitor apparatus 5a. In other words, the message indicates that the parking assistance system is now performing the parking assistance, and in a situation where the occupant wants to abort the parking assistance, the occupant can abort the parking assistance by touching the message.

In a situation where the guiding means 23 detects that the shift lever 9b is set to reverse and that the brake is released by the occupant, the guiding means 23 controls the accelerator ECU 8a, the steering ECU 8b and the brake ECU 8c to guide the vehicle 10 to the parking target position (#7). As illustrated in Fig. 11, during the parking assistance, scenery of a rear portion of the vehicle 10 taken by the camera 6a is displayed on the screen V of the monitor apparatus 5a. And, the caution line moves according to a movement of the vehicle 10. Further, a message "Abort parking assistance" is displayed on the screen V. The occupant can abort the parking assistance by touching the message as a required basis. Further, it is also possible that the parking assistance system is configured so that the parking assistance is aborted in a situation where, for example, the occupant operates the brake, the steering wheel 9a, or the like.

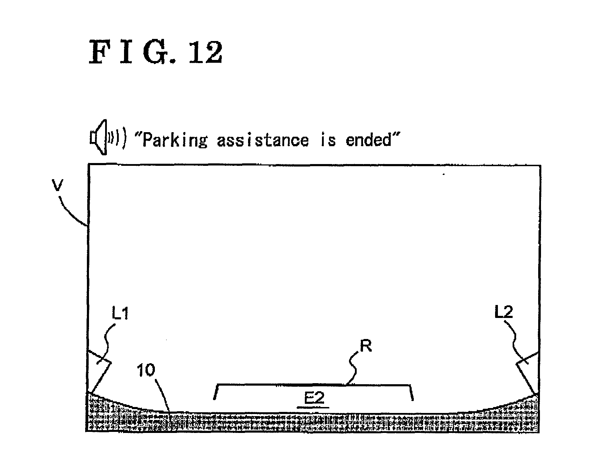

In a situation where the guiding to the parking target position is started, a moving distance of the vehicle 10 is calculated on the basis of the detection results of the speed sensor 7b and the steering angle sensor 7c, or the like (#8). In a situation where the vehicle 10 moves by a predetermined distance (example of a predetermined condition) (Yes branch of #9), the parking target position renewing process is performed and the parking target position is renewed (#10). The parking target position renewing process will be described later. In a situation where the parking target position is renewed, the guiding means 23 calculates the guiding path on the basis of the information on a current position of the vehicle 10 and the information on the renewed parking target position and guides the vehicle 10 according to the guiding path. The parking target position renewing process is repeated every time the vehicle 10 moves by the predetermined distance. Finally, the vehicle 10 is guided to the parking target position (#11). In a situation where the vehicle 10 reaches the parking target position (Yes branch of #12), the brake ECU 8c is operated, the vehicle 10 is stopped and the parking assistance is ended. In a situation where the parking assistance is ended, as illustrated in Fig. 12, an acoustic message "Parking assistance is ended" is emitted from the speaker 5b to inform the occupant that the parking assistance is ended: In the meantime, the guidance by the guiding means is not limited to automatic operations of the steering wheel 9a, the accelerator, the brake, or the like. For example, it is possible that the guiding means informs the occupant of, for example, the steering angle, steering timing, brake timing, or the like, through visual or acoustic messages, or the like.

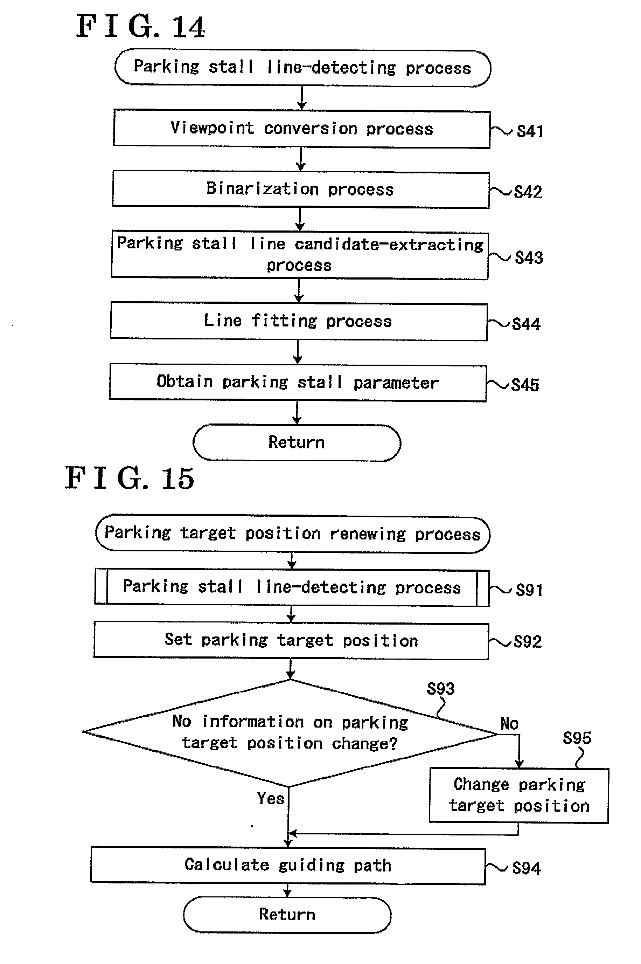

[Parking stall line-detecting process] An example of the parking stall line-detecting process indicated by #2 in Fig. 13 will be explained with reference to Fig. 14. The image taken by the camera 6a is converted from a world coordinate to an image coordinate. Then, a viewpoint conversion is performed (#41). Then, for example, a spatial filter of a 3 by 3 grid is scanned on the image processed by the viewpoint conversion. Differential process is performed for each section of the image trimmed by the spatial filter to obtain information of intensity difference. On the basis of the obtained information of the intensity difference, sections of the image, in which intensity difference is beyond a threshold, are considered to be a plus edge or a minus edge. (#42). Then, a candidate of the parking stall line is extracted on the basis of a line of the plus edges or the minus edges (#43). In a situation where the candidate of the parking stall line is extracted, the parking stall line L is detected from the candidate of the parking stall line with use of conventional Hough transform (#44). In a situation where the parking stall line L is extracted, a parking stall parameter is obtained on the basis of the detected parking stall line L (#45). For example, the information on end portions r1, r2, r3 and r4 of the parking stall lines L1 and L2 can serve as an example of the parking stall parameter.

[Parking target position renewing process] An example of the parking target position renewing process indicated by #10 in Fig. 13 will be explained with reference to Fig. 15. After the parking assistance is started, in a situation where the vehicle 10 moves by the predetermined distance, the parking target position renewing process illustrated in Fig. 15 is performed. At first, the parking reference detecting means 21 detects the parking stall line L (#91). The parking stall line-detecting process is as described above. In the parking stall line-detecting process, the detection is performed only in the parking stall line detection area W set at the time of the initial parking stall line-detecting process. In a situation where the parking stall line L is detected, the target position renewing means 25 renews the parking target position on the basis of a position of the parking stall line L relative to the vehicle 10 (#92). In a situation where the parking target position is renewed, it is checked whether the parking target position has not been changed or has been changed on the basis of the information of the target position change memorizing portion 41 (#93). In a situation where the parking target position has not been changed (Yes branch of #93), the guiding means 23 calculates the guiding path on the basis of the renewed parking target position (#94). In a situation where the parking target position renewing process is ended, the renewed parking target position and the guiding path are displayed on the monitor apparatus 5a. On the other hand, in a situation where the parking target position has been changed (No branch of #93), the renewed parking target position is changed on the basis of the difference S between the parking target position before the change and the parking target position after the change memorized by the target position change memorizing portion 41 (#95). Then, the guiding means 23 calculates the guiding path on the basis of the changed parking target position (#94).

In a situation where the vehicle 10 is guided to the initially set parking target position without renewal of the parking target position, the set parking target position is not necessarily preferable in relation to the parking reference. Such a situation arises, for example, when the vehicle 10 is distant from the parking reference and the parking target position is set on the basis of a small image of the parking reference. However, as described above, in a situation where the parking target position is renewed every time the vehicle 10 moves by the predetermined distance, the vehicle 10 comes closer to the parking reference. Then, the parking reference is set on the basis of a large image of the parking reference. Accordingly, the parking target position can be preferably set. Further, as described above, in the parking stall line-detecting process at the time of the parking target, position renewing process, only the image in the preliminarily set parking stall line detection area W is processed. Accordingly, a process speed can be higher. In the meantime, the condition for renewing the parking target position was explained taking an example that the vehicle 10 has moved by the predetermined distance. However, other conditions, for example, the vehicle 10 has run for a predetermined period of time, or the like, can be employed. Further, explanations were made taking an example of rearward parking. However, the parking assistance by the parking assistance system is not limited to the embodiment described above. The parking assistance by the parking assistance system can employ another camera 6a provided at, for example, a front portion, or the like, of the vehicle, and can be applied when frontward parking and parallel parking, or the like.

Further, there can be a situation where the parking target position preferable in relation to the parking reference such as the parking stall line L is not necessarily preferable in relation to other circumstances. Such a situation arises, for example, when a large vehicle is parked at one of parking stalls adjacent to a parking stall at which the vehicle 10 is to be parked. However, as described above, because the parking assistance system includes the target position changing means 11, the occupant can change the parking target position in consideration of situations near the parking target position. Further, at the time when the target position renewing means 25 renews the parking target position, because the target position renewing means 25 renews the parking target position while the difference S between the target position set by the target position setting means 22 and the parking target position changed by the target position changing means 11 is retained, the vehicle 10 can be guided to a desired parking target position with reliability.

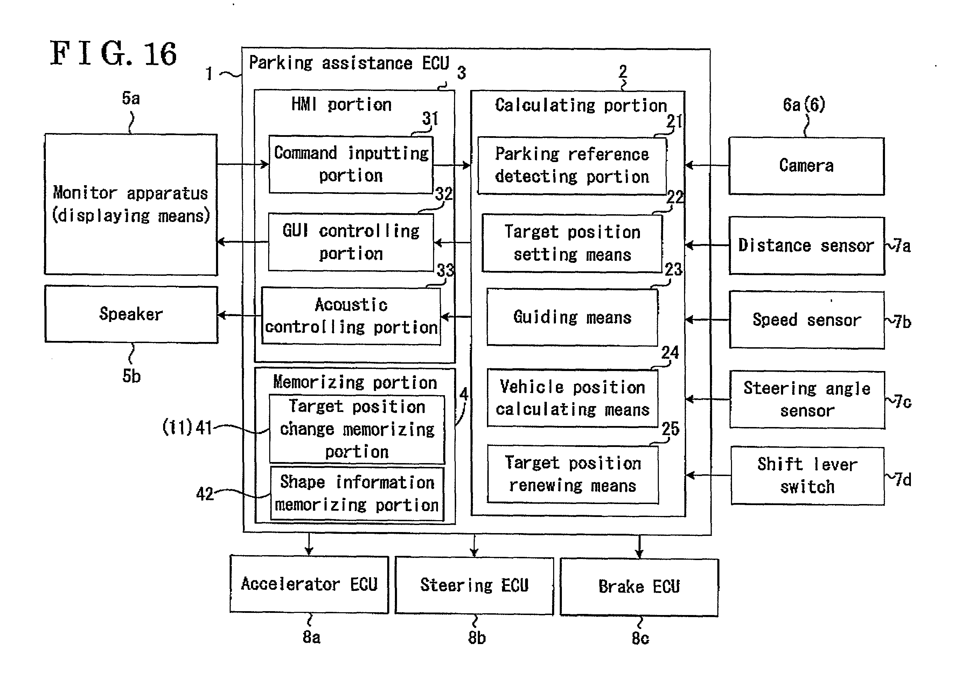

[Another embodiment] Fig. 16 represents a diagram illustrating a parking assistance system according to another embodiment. In the parking assistance system, a parking reference is a shape information of an object present around a parking stall included in image information. The parking assistance system includes, in addition to the parking assistance system according to the previous embodiment described above, a shape information memorizing portion 42 for memorizing the shape of the parking reference, or the like. In the previous embodiment, an example, in which the parking reference detecting means 21 can detect a parking reference line, which indicates a parking stall, was explained. However, the parking reference detecting means 21 can also be configured so that the parking reference detecting means 21 can detect the object present around the parking stall other than a white line, for example, a flag, a pole or a pillar of a garage, which is provided at the parking stall, or the like. In the parking assistance system according to the present embodiment, the parking reference detecting means 21 detects the parking reference from the image taken by the camera 6a on the basis of the shape information memorized by the shape information memorizing portion 42.

As a method for detecting the parking reference, for example, a template matching, in which shapes of objects in the taken image are compared with shape information included in a database of parking reference candidates preliminarily memorized by the shape information memorizing means 42 and a position of one or more object shapes which highly correlates with the shape information in the database is considered to be the parking reference, can serve as an example. Further, it is also possible to configure the parking assistance system so that an occupant can preliminarily and arbitrarily register shape information of an object, such as a pole of a garage, which is present around a parking stall and which can be the parking reference, to the shape information memorizing means 42, and the parking target position can be set on the basis of the parking reference. As described above, the parking reference detecting means detects the shape information of the object present around the parking stall included in the image information and the parking target position can be set on the basis of the object as the parking reference.

Further, the parking reference detecting means. 21 can be configured so that the parking reference detecting means 21 can perform both detections, a detection of the parking stall line described above and a detection with use of the template matching. Then, the parking reference detecting means 21 can be configured so that the parking reference detecting means 21 performs the detection with use of the template matching in a situation where the detection of the parking stall line L is impossible. Further, the parking reference detecting means 21 can be configured so that the occupant can select one of two detection methods of the parking reference described above.

There can be a situation where the parking stall line L, which becomes the parking reference, is not necessarily present, for example, a situation where the vehicle is parked in a garage of one's home, or the like. However, because the parking reference detecting means 21 is configured so that the parking reference detecting means 21 can detect the parking reference on the basis of the shape information memorized in the shape information memorizing portion 42 as described above, the parking reference can be set corresponding to situations of a position at which the vehicle 10 is to be parked. As a result, a parking assistance system, which can perform a parking assistance in a variety of parking positions, can be provided.

Further, the guiding means 23 can be configured so that guiding means 23 controls only steering means (steering wheel 9a and steering ECU 8b) for guiding the vehicle 10 to the parking target position. That is, the guiding means does not control the accelerator means (accelerator and accelerator ECU 8a) and the brake means (brake apparatus and brake ECU 8c), In this situation the driver controls the accelerator or the brake apparatus.

According to a first aspect of the present invention, a parking assistance system includes an imaging means for obtaining image information by taking an image of scenery of surroundings of a vehicle, a displaying means provided in a vehicle compartment for displaying the image information obtained by the imaging means, a vehicle position calculating means for calculating a position of the vehicle on the basis of the image information, a parking reference detecting means for detecting a parking reference utilized as a reference for parking from the image information, a target position setting means for setting a parking target position on the basis of the parking reference, a guiding means for guiding the vehicle to the parking target position and a target position renewing means for renewing the parking target position during the guiding to the parking target position. The parking reference detecting means detects the parking reference every time the vehicle moves under a predetermined condition during the guiding of the vehicle and the target position renewing means renews the parking target position on the basis of a position of the parking reference relative to the vehicle.

According to the first aspect, during the guiding of the vehicle to the parking target position, the parking reference detecting means detects the parking reference and the target position renewing means renews the parking target position on the basis of the position of the parking reference relative to the vehicle every time the vehicle moves under the predetermined condition. Accordingly, for example, even in a situation where a preferable vehicle parking position cannot be set because the vehicle is present at a position distant from the parking reference at the time when a first parking target position is set, because setting of the parking target position is performed on the basis of a position of the parking reference relative to the vehicle again in a state where the vehicle comes closer to the parking reference, a preferable parking target position can be set in relation to the parking reference.

According to a second aspect of the present invention, the parking assistance system further includes a target position changing means for changing, on the basis of an operation of an occupant, the parking target position set by the target position setting means. The target position renewing means renews the parking target position while the target position renewing means retains a position of the parking target position changed by the target position changing means relative to the parking reference.

According to the second aspect, because the parking assistance system includes the target position changing means, the parking target position set by the target position setting means can be changed by the occupant corresponding to situations in the vicinity of the parking target position, or the like. As a result, a more preferable parking target position can be set corresponding to the situations in the vicinity of the parking target position. Further, because the target position renewing means renews the parking target position while the target position renewing means retains the position of the parking target position changed by the target position changing means relative to the parking reference, for example, in the vehicle width direction, the vehicle can be guided to a desired parking target position with reliability.

According to a third aspect of the present invention, the parking reference is a parking stall line indicating a parking space.

According to the third aspect, because the parking reference detecting means can detect the parking stall line as the parking reference, the parking target position can be determined on the basis of the parking stall line. The parking stall line is normally drawn in bright colors on a dark road surface. Accordingly, visibility from the occupant of the vehicle is high. Therefore, the parking stall line is preferable for the parking reference.

According to a fourth aspect of the present invention, the parking reference is a shape information of an object present around a parking space and included in the image information.

According to the fourth aspect, because the parking reference is the shape information of the object present around the parking space and included in the image information, the parking reference can be set corresponding to situations of a a position at which the vehicle is to be parked. As a result, a parking assistance system, which can assist parking for a variety of parking positions, can be provided. Here, it is preferable that the shape information of the object is information on other than the parking stall line, such as a flag, a pole and a pillar of a garage provided around the parking space, or the like.

The principles, preferred embodiment and mode of operation of the present invention, have been described in the foregoing specification. However, the invention that is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents that fall within the spirit and scope of the present invention as defined in the claims, be embraced thereby.

A parking assistance system includes an imaging means (6a) for obtaining image information of surroundings of a vehicle, a displaying means (5a) for displaying the image information, a vehicle position calculating means (24) for calculating a vehicle position from the image information, a parking reference detecting means (21) for detecting a parking reference from the image information, a target position setting means (22) for setting a parking target position on the basis of the parking reference, a guiding means (23) for guiding the vehicle to the parking target position and a target position renewing means (25) for renewing the parking target position during the guiding. The parking reference detecting means detects the parking reference every time the vehicle moves under a predetermined condition during the guiding. The target position renewing means renews the parking target position on the basis of a position of the parking reference relative to the vehicle.

## Claims

1. A parking assistance system, comprising:
an imaging means (6a) for obtaining image information by taking an image of scenery of surroundings of a vehicle;
a vehicle position calculating means (24) for calculating a position of the vehicle on the basis of the image information;
a parking reference detecting means (21) for detecting a parking reference utilized as a reference for parking from the image information, and
a target position setting means (22) for setting a parking target position on the basis of the parking reference **characterized in that**
the parking assistance system further includes a parking reference renewing means (21) for renewing the parking reference every time the vehicle moves under a predetermined condition, and
a target position renewing means (25) for renewing the parking target position based on the parking reference renewed by the parking reference renewing means every time the vehicle moves under a predetermined condition.

2. The parking assistance system according to claim 1, the parking reference renewing means includes the parking reference detecting means, which detects the parking reference every time the vehicle moves under a predetermined condition from the image information obtained by the imaging means.

3. The parking assistance system according to any one of claim 1 to 2, further comprising a guiding means (23) for guiding the vehicle to the parking target position; wherein the parking reference renewing means renewing the parking reference every time the vehicle moves under a predetermined condition during the guiding of the vehicle, and the target position renewing means renews the parking target position during the guiding of the vehicle to the parking target position on the basis of a position of the parking reference relative to the vehicle.

4. The parking assistance system according to any one of claims 3, wherein
the guiding means calculates a guiding path from a current position of the vehicle calculated by the vehicle position calculating means to the parking target position.

5. The parking assistance system according to claim 4, wherein
the guiding means calculates the guiding path on the basis of a renewed parking target position in a situation where the parking target position is renewed by the target position renewing means.

6. The parking assistance system according to any one of claims 4 to 5, the guiding means includes a displaying means (5a) provided in a vehicle compartment for displaying the guiding path.

7. The parking assistance system according to any one of claims 3 to 6, wherein the guiding means guides the vehicle to the parking target position along the guiding path by controlling a steering means (9a, 8b).

8. The parking assistance system according to any one of claim 1 to 7, further comprising a target position changing means (11) for changing, on the basis of an operation of an occupant, the parking target position set by the target position setting means, wherein the target position renewing means renews the parking target position while the target position renewing means retains a position of the parking target position changed by the target position changing means relative to the parking reference.

9. The parking assistance system according to any one of claims 1 to 8, wherein the parking reference is a parking stall line (L1, L2) indicating a parking space, and the parking reference detecting means detects information on the parking stall line and sets a parking stall line detection area (W), in which a detection of the parking stall line is performed, on the basis of the information on the parking stall line, and the parking reference detecting means detects the parking stall line in the parking stall line detection area every time the vehicle moves under the predetermined condition.

10. The parking assistance system according to any one of claims 1 to 8, wherein the parking reference is a shape information of an object present around a parking space and included in the image information.
